# DEMANDE DE BREVET EUROPEEN

(11) **EP 4 687 308 A1**
(43) Date de publication de la demande: **04.02.2026**
(21) Numéro de dépôt: 25192596.2
(22) Date de dépôt: 29.07.2025
(51) Int. Cl.: H04B 7/185

(54) **TERMINAL SATCOM AMÉLIORÉ ET PROCÉDÉ DE CONNEXION ASSOCIÉ**

(30) Priorité: 30.07.2024 FR 2408425
(71) Demandeur: THALES, 92190 Meudon (FR)
(72) Inventeur: Soulié, Antoine, 92622 Gennevilliers Cedex (FR); Mathieu, Christophe, 92622 Gennevilliers Cedex (FR); Darche, Davy, 92622 Gennevilliers Cedex (FR)
(74) Mandataire: Lavoix

(57) **Abrégé**

Ce terminal (10) comporte : une antenne (14) comportant des premières et secondes voies d'émission/réception ; une première chaine (15), respectivement une seconde chaine (17), connectée aux premières voies d'émission/réception, respectivement aux secondes voies d'émission/réception ; un contrôleur (12) adapté pour piloter l'antenne (14) et configurer les première et seconde chaines, soit en établissant un premier canal (C1) via un premier satellite (20) et en utilisant les premières voies d'émission/réception, soit en établissant un second canal (C2) via un second satellite (30) en utilisant les secondes voies d'émission/réception, le second satellite appartenant à une constellation de satellites défilants, le contrôleur étant adapté pour, alors que le premier canal est activé, accéder à un serveur pour récupérer un fichier de configuration d'au moins le second satellite permettant d'activer le second canal.

## Description

L'invention a pour domaine technique celui des terminaux SATCOM de télécommunication dans un réseau cellulaire non-terrestre - NTN (« Non-Terrestrial Networks ») utilisant la technologie de 5^{e} génération - 5G, telle que normalisée par l'organisme de standardisation 3GPP (« 3rd Generation Partnership Project »).

Le 3GPP (« 3rd Generation Partnership Project ») produit des normes définissant les besoins, les architectures et les procédures de fonctionnement des réseaux de télécommunication cellulaire.

Si les premiers éléments normatifs en relation avec des réseaux non-terrestres ont été définis dans la version 17 de la norme 5G (« Release 17 », complétée en juin 2022), le travail normatif se poursuit.

On ainsi été publiés les spécifications techniques 3GPP TS 38.300 et 3GPP TS 23.501, ainsi que les rapports techniques 3GPP TR 23.700-28, 3GPP TR 23.700-29, 3GPP TR 23.737, 3GPP TR 38.821.

Les dernières conclusions de ces études seront intégrées à la version 19 de la norme 5G, qui devraient être publiée en juin 2026.

Ces études proposent notamment une architecture d'un réseau 5G NTN dans laquelle tout ou partie d'une station de base (aussi dénommée gNode-B ou gNB) d'un réseau d'accès radio - RAN (« Radio Access Network ») est embarquée dans la charge utile d'un satellite et participe au traitement des paquets de données. On parle alors d'architecture régénérative. Le réseau 5G NTN régénératif peut réduire le nombre de stations sol et aussi fournir des services de connectivité avec des débits plus élevés qu'un réseau 5G NTN qui utiliserait les satellites uniquement pour retransmettre les paquets de données de manière transparente.

L'architecture régénérative utilise la flexibilité de l'architecture NG-RAN qui autorise différentes options de désagrégation d'un gNB de part et d'autre d'une interface normalisée. Par exemple, dans une séparation dite « couche haute » du gNB (« Higher Layer Split » ou HLS), telle que spécifiée dans 3GPP TS 38.401, un gNB est constitué d'une unité haute, gNB-CU, et d'une unité basse gNB-DU, et l'interface entre gNB-CU et gNB-DU est dénommée interface F1.

Avec une telle séparation du gNB, les couches protocolaires associées à l'unité basse du gNB sont mises en œuvre par la charge utile embarquée à bord d'un satellite et couches protocolaires de l'unité haute du gNB sont dans une station au sol.

A **partir de** la station au sol, l'unité haute du gNB se connecte à un cœur de réseau 5G - CN (« Core Network »), comportant par exemple une passerelle vers un réseau public, comme l'Internet.

Un terminal SATCOM est un équipement utilisateur au sens de la 5G, qui est pourvu d'une antenne directive, c'est-à-dire dont le faisceau peut être orienté soit mécaniquement, soit électroniquement, notamment pour pouvoir suivre le mouvement de défilement d'un satellite LEO ou MEO.

Contrairement au cas d'un satellite géostationnaire - GEO (« Geostationary Earth Orbit »), dans le cas d'une constellation de satellites non géostationnaires ou défilant, en orbite basse - LEO (« Low Earth Orbit ») ou en orbite moyenne - MEO (« Medium Earth Orbit »), le terminal SATCOM ne sait pas ni où, ni quand rechercher un satellite défilant de la constellation pour établir une connectivité s'il n'a pas été préalablement informé des éphémérides des satellites de cette constellation, ainsi que d'une heure commune, et de sa position géographique courante.

De plus, pour pouvoir se connecter à un satellite défilant, le terminal SATCOM doit en outre connaitre la configuration instantanée de la charge utile de ce satellite défilant, notamment lorsque celle-ci est du type régénérative. Dans ce cas, au lieu d'être transparente, la charge utile participe au traitement des paquets de données. La configuration regroupe des données telles que par exemple le plan de fréquence, la loi de repointage du faisceau du satellite (« beam-hopping » en anglais), la configuration du protocole d'accès, la hauteur minimum au-dessus de l'horizon, etc.

Dans ce qui, suit on parlera simplement de satellite LEO pour désigner un satellite défilant d'une constellation LEO et/ou MEO.

Selon l'état de la technique, dans le cas d'une constellation de satellites LEO complète, le terminal SATCOM est initialisé en utilisant un fichier préenregistré d'éphémérides et en demandant à l'opérateur de ce terminal SATCOM de renseigner, de manière manuelle, une position courante du terminal et une heure courante.

Une fois initialisé, le terminal SATCOM est alors capable de rechercher un ou plusieurs satellites LEO en visibilité.

Pour se connecter à un satellite LEO en visibilité particulier, l'opérateur du terminal SATCOM doit ensuite renseigner les données de configuration instantanées relatives à ce satellite LEO.

Le principal inconvénient est de devoir disposer d'une constellation de satellites LEO complète pour fournir une connectivité permanente à l'utilisateur. Or ceci n'est pas toujours le cas et on souhaiterait pouvoir utiliser un terminal SATCOM avec une constellation très incomplète.

Un autre inconvénient de cette approche est de devoir initialiser manuellement un terminal SATCOM. Cela nécessite que l'opérateur soit qualifié. C'est une source d'erreur, d'autant qu'un terminal SATCOM est généralement utilisé sur le terrain.

Une constellation incomplète se rencontre notamment dans cas d'un démonstrateur. La constellation est alors constituée d'un ou d'un très petit nombre de satellite(s) LEO de test. Un satellite LEO de test permet par exemple de tester certaines solutions techniques pour sa charge utile régénérative, comme par exemple tester des lois de repointage. L'initialisation du terminal SATCOM manuellement devient alors laborieuse si elle doit être faite à chaque modification de la configuration de la charge utile d'un ou de chaque satellite LEO de test.

Une constellation incomplète se rencontre également dans une phase d'ouverture de service au moment du déploiement du système et que tous les satellites LEO de la constellation ne sont pas encore en fonction.

Une constellation incomplète se rencontre également au cours du fonctionnement d'un système en mode dégradé, lorsqu'un ou plusieurs des satellites LEO sont défaillants.

Mais surtout, une telle initialisation ne permet pas au terminal SATCOM d'établir la meilleure connexion possible en choisissant un satellite LEO parmi l'ensemble des satellites LEO visibles à l'instant courant. En effet, le terminal ne dispose pas par avance des données de configuration des satellites LEO, qui sont des informations susceptibles de changer fréquemment et qui ne peuvent être préenregistrées dans la mémoire du terminal SATCOM.

L'invention a donc pour but de résoudre ces problèmes en proposer un terminal SATCOM disposant d'une connectivité présente et disponible à chaque instant, cette connectivité étant la meilleure possible, généralement fournie par un satellite défilant en orbite basse de la constellation.

Par ailleurs, on connait les documents US 11 595 115 B2, US 2020/412442 A1 et WO 2021/061871 A1.

Pour cela l'invention a pour objet un terminal SATCOM , un procédé, mis en œuvre par le contrôleur dudit terminal SATCOM, et un programme d'ordinateur comportant des instructions logicielles qui, lorsqu'elles sont exécutées par le contrôleur dudit terminal SATCOM précédent, mettent en œuvre ledit procédé selon les revendications annexées.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
- La figure 1 est une représentation schématique d'un mode de réalisation d'un système de télécommunication intégrant un terminal SATCOM selon l'invention ; et,
- La figure 2 est une représentation sous forme de blocs d'un mode de réalisation d'un procédé d'utilisation du terminal SATCOM de la figure 1.

**Le terminal** SATCOM selon l'invention est adapté pour présenter au moins deux faisceaux de réception et un faisceau d'émission reconfigurables, de manière à acquérir, via un premier canal desservi par un satellite géostationnaire - GEO, auprès d'un serveur, les données de configuration instantanées des satellites LEO d'une constellation, puis à se connecter, via un second canal desservi par un satellite LEO de la constellation.

### SYSTEM E

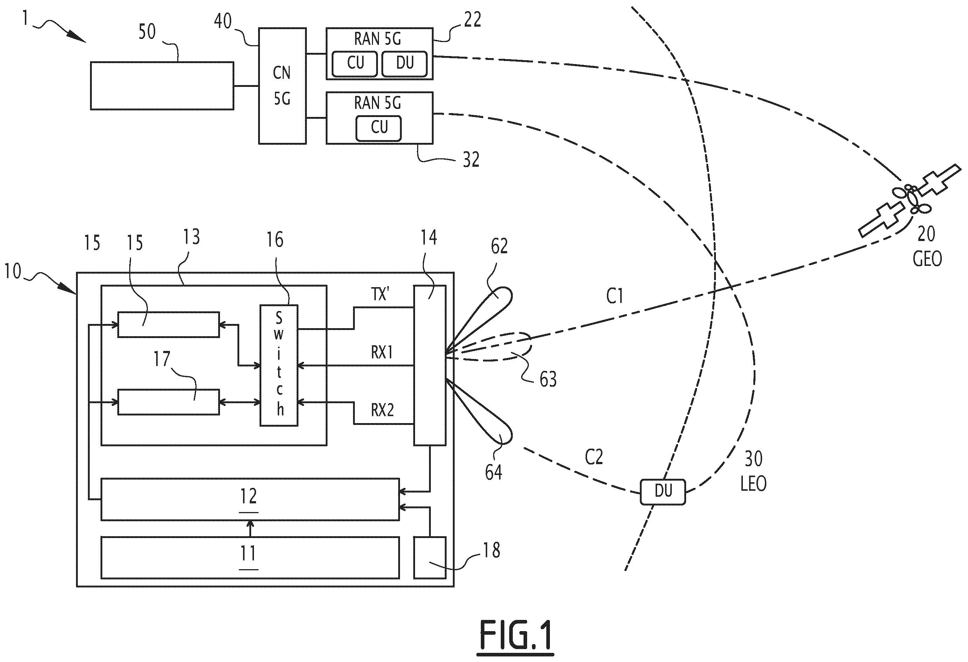

Le système 1, qui est un système de télécommunication 5G, représenté sur la figure 1 comporte :
- un terminal SATCOM 10 ;
- une constellation de satellites en orbite basse, LEO ou MEO, comportant au moins un satellite défilant, ou satellite LEO, 30 ;
- un satellite en orbite géostationnaire, ou satellite GEO, 20 ; et, au sol,
- un cœur de réseau 5G 40 ;
- un premier réseau d'accès radio 5G, RAN 5G 22, connecté au cœur de réseau 5G 40, permettant d'établir un premier canal de communication 5G, C1, avec le terminal SATCOM 10 via le satellite GEO, se dernier fonctionnement de manière transparente sur les paquets de données ;
- un second réseau d'accès radio 5G, RAN 5G 32, connecté au cœur de réseau 5G 40, permettant d'établir un second canal de communication 5G, C2, avec le terminal SATCOM via l'un ou l'autre des satellites LEO de la constellation, chaque satellite LEO implémentant une charge utile régénérative en 5G NTN (et mettant en œuvre avantageusement une fonction de commutation de faisceau - « beam-hopping ») ; et,
- un serveur 50 de données de configuration, connecté au cœur de réseau 5G 40.

Le serveur 50 a pour fonction de stocker et de transmettre des fichiers de configuration au terminal SATCOM, sur requête de ce dernier.

Le terminal SATCOM 10 comporte :
- une antenne active 14 ; et,
- un moyen 11 de génération et de consommation de données applicatives, comme une application logicielle.
selon l'invention, le terminal SATCOM comporte en outre :
- un contrôleur multi-orbites 12 ;
- un module de positionnement par satellites, par exemple du type GPS, 18 ;
- un modem 13 intégrant

∘ une première chaîne de communication 15 ;
∘ une seconde chaîne de communication 17 ; et,
∘ un commutateur (« switch ») 16, par exemple numérique, adapté pour connecter les entrées/sorties des première et seconde chaines aux voies de l'antenne 14.

Le terminal est avantageusement équipé d'un module de positionnement par satellites 18 permettant de déterminer automatiquement la position instantanée du terminal SATCOM 10 et de délivrer un signal d'horloge. Ces informations sont transmises au contrôleur multi-orbites 12. D'autres manière d'indiquer ces données au contrôleur 12 sont envisageables.

Le contrôleur multi-orbites 12 est un ordinateur comportant des moyens de calcul, tels qu'un processeur, des moyens de mémorisation, tels qu'une mémoire, et des interfaces d'entrée/sortie. Sa mémoire stocke notamment les instructions de programmes d'ordinateurs, en particulier un programme dont l'exécution permet la mise en œuvre du procédé 100, décrit ci-dessous en détail, pour faire fonctionner le terminal SATCOM 10 convenablement.

Le contrôleur multi-orbites 12 a pour fonction de piloter l'antenne active 14 et le modem 13 du terminal SATCOM 10 en fonction de la présence ou non d'un ou plusieurs satellites LEO, en plus de la présence d'un satellite GEO.

Dans le présent mode de réalisation, l'antenne active 14 du terminal SATCOM 10 est une antenne à pointage électronique.

De plus, elle est du type antenne active multi-faisceau de manière à présenter une double capacité au moins en réception. Elle est ainsi pilotée de manière à présenter, à chaque instant du fonctionnement, un premier faisceau en réception 62, un second faisceau en réception 63 et un faisceau en émission 64. Les directions de pointage des différents faisceaux sont orientables.

L'antenne active 14 présente par conséquent une voie d'émission TX, une première voie de réception RX1 et une seconde voie de réception RX2.

Le contrôleur multi-orbite 12 possède une interface de pilotage et de configuration de chacune des première et seconde chaines 15 et 17 du modem 13. Via cette interface, il peut au minimum:
- configurer les fréquences d'émission et de réception de chacune de ces deux chaines ;
- activer ou désactiver l'émission ;
- arrêter/démarrer une chaine.

Le contrôleur multi-orbites 12 est ainsi adapté pour configurer chacune des première et seconde chaines 15 et 17 de sorte que le modem 13 exécute une première instance de protocole 5G NTN en émission / réception et une seconde instance capable de démoduler un **signal 5G** NTN en réception. Le contrôleur 12 pilote alors chaque instance du modem de manière indépendante. Les chaines de traitement sont associées aux voies d'émission et/ou de réception de l'antenne via le commutateur, alors que l'antenne pointe dans une direction appropriée. Par exemple, la première chaine est associée au protocole de communication avec un satellite GEO, et la seconde chaine est associée au protocole de communication avec un satellite LEO.

En outre, le contrôleur multi-orbites 12 est adapté pour associer une instance de protocole 5G NTN à une voie de réception sélectionnée parmi les première et seconde voix de réception de l'antenne et éventuellement à la voie d'émission de l'antenne 14. Pour ce faire, le contrôleur multi-orbites 12 commande le commutateur 16 interne au modem 13. Le commutateur peut par exemple présenter trois états :
- dans un premier état « GEO seul »: il est configuré pour émettre et recevoir les flux entre les voies RX1 et TX de l'antenne et la première chaine.
- dans un second état 2 « GEO + veille LEO »: il est configuré pour émettre et recevoir les flux entre les voies RX1 et TX de l'antenne et la première chaine et pour, en plus, rediriger le flux reçu sur la voie RX2 vers la seconde chaine 2.
- Dans un troisième état « LEO+ veille GEO » : il est configuré pour commuter la voie TX de la première chaine 1 à la seconde chaine afin transmettre un flux de la seconde chaine vers l'antenne et le de là vers le satellite LEO.

Le contrôleur multi-orbite 12 possède une interface de commande du commutateur 16. Via cette interface il peut au minimum :
- Associer la sortie TX1 à l'une ou l'autre chaine ;
- Associer l'entrée RX1 à l'une ou l'autre chaine ;
- Permuter en conséquence l'entrée RX2 à l'autre chaine.

Le contrôleur multi-orbite est adapté pour piloter l'antenne 14.

Pour ce faire, le contrôleur 13 possède une interface de pilotage de l'antenne à formation de faisceau électronique. Via cette interface, il peut au minimum :
- configurer les fréquences d'émission et de réception de chacune des voies de l'antenne ;
- configurer le pointage en azimuth et en élévation de chacun des faisceaux de l'antenne.

### PROCEDE

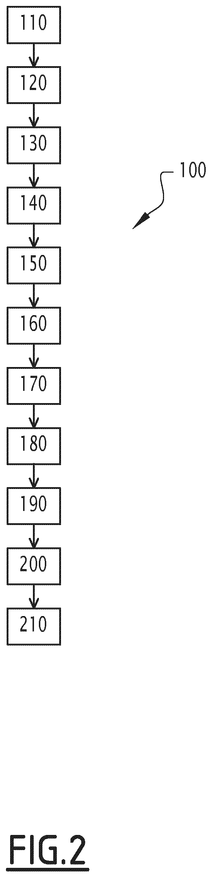

Un procédé d'utilisation du terminal SATCOM 10 va maintenant être présenté en référence à la figure 2. Ce procédé 100 est mis en œuvre par le contrôleur 12.

Le procédé 100 débute par une étape 110 de configuration du terminal 10 de manière à établir un premier canal bidirectionnel C1 selon le premier protocole 5G NTN via le satellite GEO 20. La première chaine 15 est connectée à la voix d'émission TX et à la première voix de réception RX1 pour établir ce premier canal C1. Un fichier de configuration GEO est préenregistré sur le terminal SATCOM 10, dans la mémoire du contrôleur 12. Ce fichier est léger et peu susceptible de changements. Le satellite 20 étant géostationnaire, il est aisé de pointer le premier faisceau de réception 62 et le premier faisceau d'émission 63 dans sa direction à partir de la connaissance de la position courante du terminal (telle que mesurée par le module de positionnement 18). Les paramètres de fonctionnement de l'antenne du satellite GEO sont stables. De plus, comme la charge utile du satellite GEO est transparente, les données de configuration sont en petit nombre.

Le premier canal C1 est établi avec le cœur de réseau 5G 40 via le satellite GEO 20 et le RAN 5G 22.

Il peut servir à la communication de données applicatives entre l'application 11 exécutée sur le terminal 10 et le sol. En communication montante, le flux de données applicative générées est appliqué, par le contrôleur 12, en entrée de la première chaine 15, et, en communication descendante, le flux de données applicatives reçues par la première chaine 15, est transmis, via le contrôleur 12, à l'application 11.

Pour le basculement de la communication du premier canal C1 via le satellite GEO vers un second canal C2 via un satellite LEO de la constellation, le procédé 100 se poursuit par une étape 120 d'interrogation du serveur 50 par le contrôleur 12 via le premier canal C1 et de réception d'un fichier d'assistance du ou de chaque satellite LEO de la constellation. Ce fichier d'assistance contient les éphémérides des satellites LEO de la constellation et pour chaque satellite LEO des données de configuration, comme par exemple la fréquence d'émission/réception, et/ou la loi de beam-hopping, et/ou l'angle mini au-dessus de l'horizon.

Compte tenu des données du fichier d'assistance reçu et de la position courante du terminal 10 telle qu'indiquée par le module de positionnement par satellites 18, dans une étape 130, le contrôleur 12 détermine l'heure d'apparition du prochain satellite LEO, ainsi que sa direction (azimuth, élévation) d'apparition et son heure de disparition.

Le procédé 100 se poursuit par une étape 140 de détermination de la durée de visibilité de ce prochain satellite LEO.

Si cette durée est inférieure à un seuil prédéfini, le satellite LEO n'est pas considéré et le satellite LEO suivant dans l'ordre d'apparition, s'il existe, est considéré. Si aucun satellite LEO n'est visible pendant une période suffisamment longue, le terminal SATCOM 10 reste connecté au satellite GEO pour communiquer sur le premier canal C1.

Si la durée de visibilité d'un satellite LEO est supérieure ou égale au seuil prédéfini, le procédé 100 se poursuit par une étape 150 de configuration de la seconde voie de réception de l'antenne. Quelques secondes avant l'apparition du satellite LEO, le second faisceau de l'antenne est pointé dans la direction calculée pour que le terminal soit en mesure de recevoir un flux RF généré selon un second standard 5G NTN. Pour cela, la seconde chaine est connectée à la seconde voix de réception.

Le procédé 100 se poursuit par une étape 160 de réception d'une balise émise par le satellite LEO.

Après accrochage, le procédé 100 se poursuit par une étape 170 d'asservissement du pointage du second faisceau dans la direction du satellite LEO pour suivre le défilement de ce satellite.

Dans l'étape 180 suivante, le contrôleur interrompt les flux d'émission et de réception en direction du satellite GEO, en ayant préalablement prévenu de l'arrêt de ses transmissions à la cellule desservie par le satellite GEO.

Le procédé 100 se poursuit par une étape 190 de reconfiguration du faisceau d'émission à la fois en direction, afin de le faire pointer dans la même direction que le second faisceau de réception asservi sur le satellite LEO, et en fréquence, afin que le satellite LEO puisse recevoir et démoduler le signal. La seconde chaine est maintenant connectée non seulement à la seconde voix de réception, mais également à la voix d'émission pour établir un second canal de communication bidirectionnel selon le second protocole 5G NTN fournit via le satellite LEO.

Enfin, dans une étape 200, le contrôleur déclenche d'une procédure 3GPP de rentrée réseau via la charge utile 5G NTN régénérative du satellite LEO.

La liaison étant maintenant établie avec le sol via la constellation LEO. Elle est utilisée pour la communication de données entre le terminal et le sol via le satellite LEO. En communication montante, le flux de données produit par le générateur est appliqué, par le contrôleur, en entrée de la seconde chaine, et, en communication descendante, le flux de données reçu par la seconde chaine, est transmis, via le contrôleur, vers le générateur de données.

Sur disparition sous l'horizon du satellite LEO, pour basculer à nouveau sur une communication 5G via le satellite GEO, le procédé 100 se poursuit par une étape 210 de reconfiguration du faisceau d'émission du terminal en fréquence afin que le satellite GEO puisse recevoir et démoduler le signal, et une étape de déclenchement d'une procédure 3GPP de rentrée réseau via le satellite GEO.

### VARIANTES ET AVANTAGES

Cette solution permet d'établir rapidement une liaison entre un terminal et un satellite en orbite basse, et permet de ne pas avoir à reconfigurer manuellement le terminal si les paramètres de configuration évoluent (fréquence, puissance, etc.).

Le terminal 5G NTN est autonome. Il n'a pas besoin d'une connexion Internet ou de l'intervention d'un opérateur pour acquérir les données de configuration associées aux satellites de la constellation LEO et/ou MEO.

Cette solution permet de maintenir une connectivité du terminal même quand aucun satellite en orbite basse n'est en visibilité.

Cette solution permet de mettre en œuvre un terminal 5G NTN sous une constellation en orbite basse très incomplète tout en bénéficiant dès la mise en service du premier satellite de la constellation de la capacité supplémentaire qu'elle apporte.

La solution permet d'accroitre la capacité du système et les débits moyens des terminaux au fur et à mesure que les satellites en orbite basse sont déployés.

Ainsi le terminal se trouve dans une couverture permanente, offrant le débit le plus élevé possible : bascule du GEO vers le LEO dès que ce dernier est en visibilité et inversement avant la perte de visibilité du LEO.

L'invention est applicable que la charge utile d'un satellite défilant ou géostationnaire soit du type régénérative ou non.

Si la description a présenté le cas où le terminal SATCOM commençait par se connecter à un premier satellite du type géostationnaire pour récupérer les données de configuration d'un second satellite d'une première constellation de satellites défilants (notamment une constellation incomplète), en variante le terminal SATCOM se connecte à un premier satellite d'une seconde constellation LEO et/ou MEO de satellites défilants (notamment complète et totalement déployée de sorte que les informations de configuration sont stables et connues des terminaux SATCOM) pour récupérer les données de configuration de la première constellation d'intérêt.

## Revendications

1. Terminal SATCOM (10) comportant :
- Une antenne (14), qui est une antenne active multi-faisceau, comportant une première voie d'émission, une première voie de réception, une seconde voie d'émission et une seconde voie de réception ;
- Un module (18) de positionnement adapté pour délivrer une position instantanée du terminal SATCOM ;
- Une première chaine (15) mettant en œuvre un premier protocole de communication, connectée à la première voie de réception et éventuellement à la première voie d'émission ;
- Une seconde chaine (17) mettant en œuvre un second protocole de communication, connectée à la seconde voie de réception et éventuellement à la seconde voie d'émission ;
- Un contrôleur (12) adapté pour piloter l'antenne (14) et configurer les première et seconde chaines, de manière à maintenir une connectivité, soit en établissant un premier canal (C1) via un premier satellite (20) selon le premier protocole et en utilisant la première voie d'émission et la première voie de réception, soit en établissant un second canal bidirectionnel via un second satellite (30) selon le second protocole en utilisant la seconde voie d'émission et la seconde voie de réception, le second satellite étant un satellite défilant d'une constellation de satellites défilants, le contrôleur étant adapté pour, alors que le premier canal est activé, utiliser ledit premier canal pour accéder à un serveur et récupérer un fichier de configuration d'au moins le second satellite permettant, compte tenu de la position courante du terminal SATCOM délivrée par le module de positionnement (18) d'activer le second canal.

2. Terminal SATCOM selon la revendication 1, dans lequel la première voie d'émission et la seconde voie d'émission sont confondues en une même voie d'émission (TX), le terminal SATCOM (10) comportant en outre un commutateur (16) pour connecter la première voie de réception (RX1) en entrée de la première chaine (15), la seconde voie de réception (RX2) en entrée de la seconde chaine (15) et la voie d'émission (TX) soit en sortie de la première chaine soit en sortie de la seconde chaine, le contrôleur (12) étant adapté pour commander le commutateur (16) lors de l'activation du premier canal et lors de l'activation du second canal.

3. Terminal SATCOM selon la revendication 1 ou la revendication 2, dans lequel le contrôleur (16) est adapté pour piloter l'antenne (14) de manière à pointer un premier faisceau associé à la première voie en réception et éventuellement à la première voie en émission vers le premier satellite et à pointer un second faisceau associé à la seconde voie en réception et éventuellement à la seconde voie en émission vers le second satellite.

4. Terminal SATCOM selon l'une quelconque des revendications 1 à 3, dans lequel le contrôleur (16) est adapté pour configurer la première chaine (15) de manière à pouvoir établir le premier canal et la seconde chaine (17) de manière à pouvoir établir le second canal.

5. Procédé (100), mis en œuvre par le contrôleur d'un terminal SATCOM selon l'une des revendications 1 à 4, comportant les étapes consistant à :
- configurer (110) le terminal SATCOM pour établir le premier canal (C1) selon le premier protocole via un premier satellite (30) ;
- interroger (120), via le premier canal, un serveur (50) et réceptionner un fichier de configuration d'au moins un second satellite (30) d'une constellation de satellites défilants ;
- déterminer (130), à partir du fichier de configuration et de la position courante du terminal délivrée par le module de positionnement une heure d'apparition et une direction d'apparition du second satellite ;
- configurer (150) la seconde chaine (17) et piloter l'antenne (14) pour pointer dans la direction d'apparition du second satellite ;
- après accrochage du second satellite, asservir (170) le pointage de l'antenne (14) pour suivre un défilement du second satellite ;
- interrompre (180) les communications sur le premier canal ; et,
- déclencher une procédure de rentrée sur un réseau pour établir le second canal (C2) via le second satellite.

6. Procédé (100) selon la revendication 5, comportant en outre les étapes consistant à, avant une disparition sous l'horizon du second satellite (30), interrompre les communications sur le second canal (C2) ; et, déclencher une procédure de rentrée sur un réseau pour établir le premier canal (C1).

7. Procédé (100) selon la revendication 5 ou la revendication 6, dans lequel, lorsque les première et seconde voies d'émission sont une même voie d'émission, le procédé comporte une étape consistant à piloter l'antenne (14) pour reconfigurer un faisceau d'émission afin de le faire pointer dans la même direction qu'un second faisceau de réception asservi sur le second satellite, et de configuration de la seconde chaine, connectée non seulement à la seconde voie de réception, mais également à la voie d'émission, pour pouvoir établir le second canal de communication bidirectionnel.

8. Procédé (100) selon la revendication 7, comportant une étape consistant à piloter l'antenne (14) pour reconfiguration du faisceau d'émission afin de le faire pointer dans la même direction qu'un premier faisceau de réception orienté vers le premier satellite, et de configuration de la première chaine (15), connectée non seulement à la première voix de réception, mais également à la voix d'émission, pour pouvoir établir le premier canal (C1).

9. Procédé (100) selon l'une quelconque des revendications 5 à 8, dans lequel une configuration du terminal SATCOM pour établir le premier canal (C1) est enregistré dans une mémoire du contrôleur (12).

10. Procédé (100) selon l'une quelconque des revendications 5 à 9, dans lequel le fichier de configuration d'au moins le second satellite (30) d'une constellation de satellites défilants contient des éphémérides, et des informations comportant une fréquence d'émission/réception du second satellite et/ou une loi de repointage du faisceau du second satellite et/ou un angle minimale de visibilité du second satellite au-dessus de l'horizon.

11. Procédé (100) selon l'une quelconque des revendications 5 à 10, comportant une étape consistant à déterminer la durée de visibilité du second satellite et à vérifier si cette durée de visibilité est supérieure à un seuil avant de pointer le second faisceau vers ledit second satellite (30).

12. Programme d'ordinateur comportant des instructions logicielles qui, lorsqu'elles sont exécutées par le contrôleur d'un terminal SATCOM (10) selon l'une quelconque des revendications 1 à 4, mettent en oeuvre un procédé selon l'une quelconque des revendications 5 à 11.
